# EUROPÄISCHE PATENTSCHRIFT

(11) **EP 3 390 249 B1**
(45) Veröffentlichungstag und Bekanntmachung des Hinweises auf die Patenterteilung: **17.02.2021**
(21) Anmeldenummer: 16791395.3
(22) Anmeldetag: 07.11.2016
(51) Int. Cl.: B65G 23/12, B65G 39/02, B65G 39/12, B65G 23/04, B65G 15/60, B65G 23/44

(54) **UMLENKVORRICHTUNG FÜR FÖRDERGURTE**
DEFLECTING DEVICE FOR CONVEYOR BELTS
DISPOSITIF DE RENVOI POUR BANDES TRANSPORTEUSES

(30) Priorität: 17.12.2015 DE 102015122150
(43) Veröffentlichungstag der Anmeldung: 24.10.2018
(73) Patentinhaber: Stadler Anlagenbau GmbH, 88361 Altshausen (DE)
(72) Erfinder: SIGMUND, Ulrich, 88361 Altshausen (DE)
(74) Vertreter: Otten, Roth, Dobler & Partner mbB Patentanwälte
(86) Internationale Anmeldenummer: PCT/EP2016/076766
(87) Internationale Veröffentlichungsnummer: WO 2017/102170

(56) Entgegenhaltungen:
- AU-B2- 532 423
- DE-A1- 10 127 986
- JP-A- S6 048 817
- US-A1- 2006 027 444
- US-A1- 2014 061 003

## Beschreibung

Die Erfindung betrifft eine Umlenkvorrichtung für Fördergurte gemäß dem Oberbegriff des Anspruchs 1.

Aus der DE 101 27 986 A1 ist eine Umlenkvorrichtung für einen Fördergurt eines Bandförderers bekannt, wobei diese eine Umlenktrommel und ein Stützmittel für die Umlenktrommel, wobei das Stützmittel einen Stützkörper und eine Vielzahl von Stützeinheiten umfasst, wobei jede Stützeinheit wenigstens eine Stützrolle umfasst. Hierbei umfasst das Stützmittel eine Andrückwalze mit wenigstens einem Andrückabschnitt.

Weiterhin ist aus der AU 532 423 B2 eine Förderer-Unterbaugruppe mit einer Basis, einem Paar von aufrechten Beinen, die sich von der Basis aus erstrecken, wobei die Beine einen Satz von Förderrollen tragen.

Es ist Aufgabe der Erfindung, eine Umlenkvorrichtung für Fördergurte vorzuschlagen, bei welcher eine Umlenktrommel abgestützt ist, wobei Toleranzen der Umlenktrommel von der Abstützung kompensiert werden. Weiterhin ist es Aufgabe der Erfindung, eine verbesserte Abstützung der auf die Umlenktrommel wirkenden Trumkräfte bereitzustellen und insbesondere auch Trumkräfte abzustützen, welche aufgrund ungleichmäßiger Belastungen des Fördergurts außerhalb einer Ebene liegen, in welcher die Trumkräfte bei gleichmäßiger Belastung des Fördergurts liegen.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhafte und zweckmäßige Weiterbildungen angegeben.

Bei der erfindungsgemäßen Umlenkvorrichtung umfasst das Stützmittel einen Stützkörper und eine Vielzahl von Stützeinheiten, wobei jede Stützeinheit wenigstens eine Stützrolle und ein Federmittel umfasst, wobei das Federmittel jeweils zwischen jeder Stützrolle und dem Stützkörper angeordnet ist. Durch die Verwendung einer Vielzahl von Stützeinheiten mit jeweils federnden Stützrollen ist es möglich, die Umlenktrommel über ihre gesamte Breite individuell abzustützen, so dass in der Stützrolle vorhandene Toleranzen von einzelnen Stützeinheiten ausgeglichen werden können, ohne dass die Umlenktrommel durch extremen Gegendruck belastet wird.

Erfindungsgemäß ist es vorgesehen, dass das Federmittel eine Achse umfasst, wobei die Achse an dem Stützkörper gelagert ist. Hierdurch kann die an dem Stützmittel angeordnete Stützrolle, welche mit einer Mantelfläche der Umlenktrommel in Kontakt steht, der Umlenktrommel bei Bedarf durch eine vorübergehende Verformung des Federmittels bzw. der Achse ausweichen.

Erfindungsgemäß ist es auch vorgesehen, die Achse entweder derart an dem Stützkörper zu lagern, dass die Achse einseitig über den Stützkörper hinaussteht und ein erstes freies Ende aufweist oder die Achse derart an dem Stützkörper zu lagern, dass die Achse zweiseitig über den Stützkörper hinaussteht und hierdurch sowohl ein erstes freies Ende als auch ein zweites freies Ende aufweist. Bei derartigen Bauformen bildet die Achse einen Kragarm bzw. zwei Kragarme, welche durch eine elastische Verformung als Feder zwischen dem Stützkörper und der Stützrolle wirken.

Weiterhin ist es erfindungsgemäß vorgesehen, an dem freien Ende oder den freien Enden der an dem Stützkörper gelagerten Achse jeweils eine der Stützrollen anzuordnen. Durch die Anordnung am freien Ende bietet die Achse die größtmögliche Federwirkung für die Stützrolle.

Weiterhin ist es vorgesehen, die jeweilige Stützrolle jeweils derart an dem freien Ende der Achse anzuordnen, dass zwischen der Stützrolle und dem Stützkörper ein freier Achsenabschnitt gebildet ist. Durch den freien Achsenabschnitt wird ein nötiger Bewegungsraum geschaffen, damit sich die Stützrolle relativ zu dem Stützkörper bewegen kann.

Es ist auch vorgesehen, den freien Achsenabschnitt mit einer Länge auszustatten, welche größer ist als eine Breite der Stützrolle, und dass die Länge des freien Achsenabschnitts insbesondere wenigstens einer doppelten Breite der Stützrolle entspricht. Durch eine derartige Dimensionierung lässt sich eine ausreichende Federwirkung der Achse sicherstellen.

Es ist auch vorgesehen, dass der freie Achsenabschnitt der Achse von dem Stützkörper zu der Stützrolle hin in seinem Querschnitt und insbesondere in seinem Durchmesser abnimmt. Durch eine derartige Dimensionierung der Achse wird deren Widerstandsmoment reduziert, so dass diese bereits bei einer geringeren Krafteinwirkung auf die Stützrolle ausfedert.

Es ist auch vorgesehen, die Achse mit einem im Bereich des Stützkörpers angeordneten Rücksprung auszustatten, wobei die Stützeinheit ein Klemmmittel umfasst, welches von dem Stützkörper aus derart in den Rücksprung der Achse greift, dass die Achse formschlüssig mit dem Stützkörper verbunden ist. Hierdurch ist die Achse mit minimalem Montageaufwand bzw. Demontageaufwand an dem Stützkörper montierbar bzw. von dem Stützkörper demontierbar.

Weiterhin ist es vorgesehen, den Stützkörper mit einer Vielzahl von Rippen auszustatten, wobei die Achse jeweils in einer Aufnahme einer der Rippen derart gelagert ist, dass diese beidseitig über die Rippe übersteht. Hierdurch lassen sich auf einfache Weise eine Vielzahl von Achsen an dem Stützkörper anordnen.

Gemäß einer Ausführungsvariante ist es auch vorgesehen, die Achse mit einem ersten freien Ende und mit einem zweiten freien Ende derart an dem Stützkörper zu lagern und die Stützrolle zwischen einer linksseitigen Lagerstelle der Achse und einer rechtsseitigen Lagerstelle der Achse in einem Mittelbereich der Achse zu positionieren, wobei die Stützrolle insbesondere derart zwischen den beiden Lagerstellen angeordnet ist, dass zwischen der Stützrolle und der ersten Lagerstelle ein erster freier Achsenabschnitt gebildet ist und dass zwischen der Stützrolle und der zweiten Lagerstelle ein zweiter freier Achsenabschnitt gebildet ist. Eine derartige beidseitige Lagerung der Achse ermöglicht den Bau von Umlenkvorrichtungen, bei welchen die Stützrollen die Umlenktrommel mit besonders hohen Kräften abstützen.

Um auch bei derartigen Bauformen hinreichende Federwege sicher zu stellen, ist es vorgesehen, dass bei der beidseitig gelagerten Achse eine erster freier Achsenabschnitt eine erste Länge und ein zweiter freier Achsenabschnitt eine zweite Länge aufweist, wobei die Längen jeweils größer sind als eine Breite der Stützrolle und wobei die Längen jeweils insbesondere wenigstens einer doppelten Breite der Stützrolle entsprechen.

Gemäß einer ersten Ausführungsvariante ist es vorgesehen, dass die Mittelachsen der Achsen aller Stützeinheiten auf einer gemeinsamen Mittelachse liegen, wobei diese Mittelachse parallel zu einer Mittelachse der Umlenktrommel verläuft. Hierdurch lässt sich die Umlenkvorrichtung besonders platzsparend ausführen, so dass die Umlenkvorrichtung für Bandförderer geeignet ist, bei welchen die Umlenktrommel einen kleinen Durchmesser aufweist bzw. bei welchen der Fördergurt die Umlenktrommel mit einem großen Umschlingungswinkel umläuft.

Gemäß einer zweiten Ausführungsvariante ist es vorgesehen, dass ein erster Teil der Stützeinheiten einer ersten, oberen Gruppe zugeordnet ist und dass ein zweiter Teil der Stützeinheiten einer zweiten, unteren Gruppe zugeordnet ist, wobei die Mittelachsen der Achsen der ersten, oberen Gruppe der Stützeinheiten auf einer ersten Mittelachse liegen, wobei die Mittelachsen der Achsen der zweiten, unteren Gruppe der Stützeinheiten auf einer zweiten Mittelachse liegen, wobei diese beiden Mittelachsen parallel zu einer Mittelachse der Umlenktrommel verlaufen, wobei diese beiden Mittelachsen zu der Mittelachse der Umlenktrommel insbesondere gleiche Abstände aufweisen und wobei diese beiden Mittelachsen voneinander insbesondere einen Abstand aufweisen, welcher kleiner ist als ein Durchmesser der Umlenktrommel. Auf diese Weise ist die Umlenktrommel auch dann sicher abgestützt, wenn z.B. durch abrupte oder ungleichmäßige Belastungen Trumkräfte hervorgerufen werden, welche außerhalb einer für den Verlauf der Trumkräfte berechneten Ebene oder schräg zu dieser berechneten Ebene liegen.

Weiterhin ist es vorgesehen, das Federmittel zusätzlich zu der Achse mit wenigstens einem elastisch verformbaren Element auszustatten, wobei das elastisch verformbare Element bzw. die elastisch verformbaren Elemente zwischen der Achse und dem Stützkörper und/oder zwischen der Achse und der Stützrolle angeordnet ist bzw. sind. Hierdurch kann in einem weiten Umfang auf das Federverhalten der Stützeinheiten Einfluss genommen werden. Weiterhin werden bei einer derartigen Bauart die Achsen geschont, da eine Egalisierung von Toleranzen der Umlenktrommel durch eine Verformung der Elemente statt durch eine Verformung der Achsen erfolgt.

Schließlich ist es vorgesehen, die Stützrolle durch ein Wälzlager auszubilden, wobei die Stützrolle insbesondere durch ein Radiallager und vorzugsweise durch ein als Radiallager ausgebildetes Kugellager gebildet ist. Wälzlager stehen in unterschiedlichsten Dimensionierungen als Standardbauteile zur Verfügung und ermöglichen so einen kostengünstigen Aufbau der Umlenkvorrichtung.

Weitere Einzelheiten der Erfindung werden in der Zeichnung anhand von schematisch dargestellten Ausführungsbeispielen beschrieben.

Hierbei zeigt:
- Figur 1:: eine schematische Seitenansicht eines Bandförderers mit einer erfindungsgemäßen Umlenkvorrichtung;
- Figur 2:: eine vergrößerte Ansicht der in der Figur 1 gezeigten Umlenkvorrichtung;
- Figur 3:: eine Schnittansicht der Umlenkvorrichtung entsprechend der in den Figuren 1 und 2 gezeigten Schnittlinie III-III, wobei auf die Darstellung eines Fördergurts verzichtet wurde;
- Figur 4:: eine Schnittansicht der Umlenkvorrichtung entsprechend der in den Figuren 1 und 2 gezeigten Schnittlinie IV-IV, wobei auf eine Darstellung der Umlenktrommel und auf eine Darstellung von hinter den Stützrollen liegenden Maschinenteilen verzichtet wurde und
- Figur 5:: ein Detail der in der Figur 3 dargestellten Schnittansicht, wobei einzelne Bauteile detaillierter als in der Figur 3 dargestellt sind.

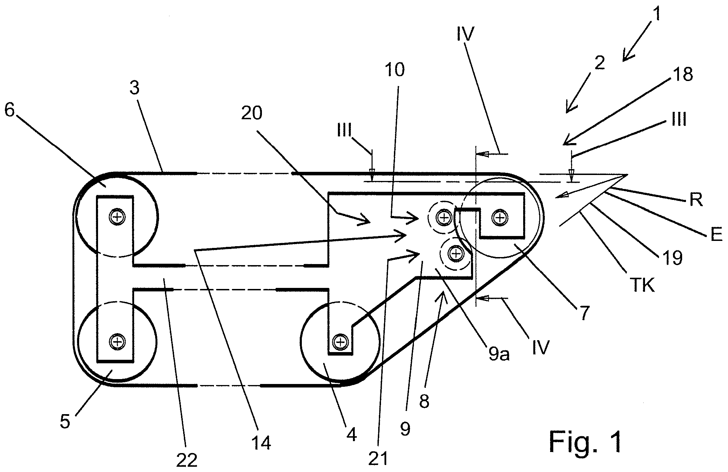

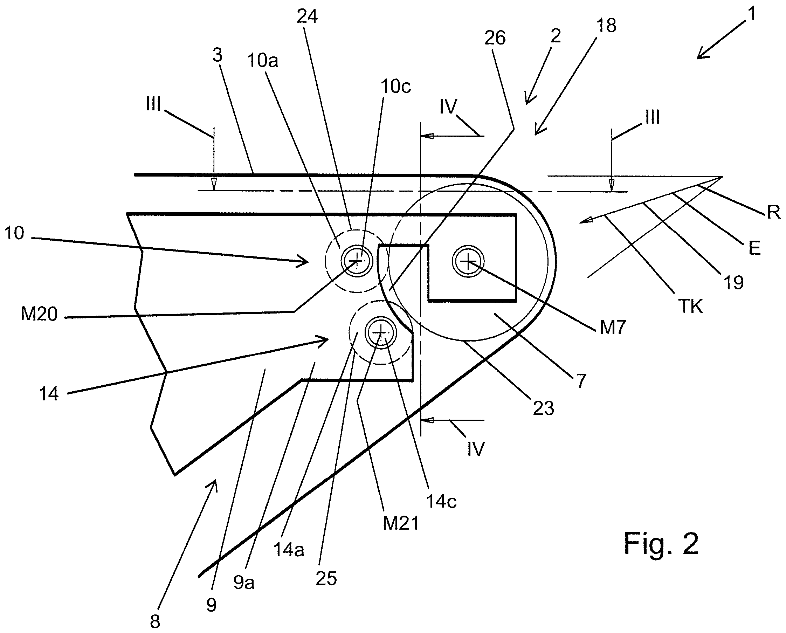

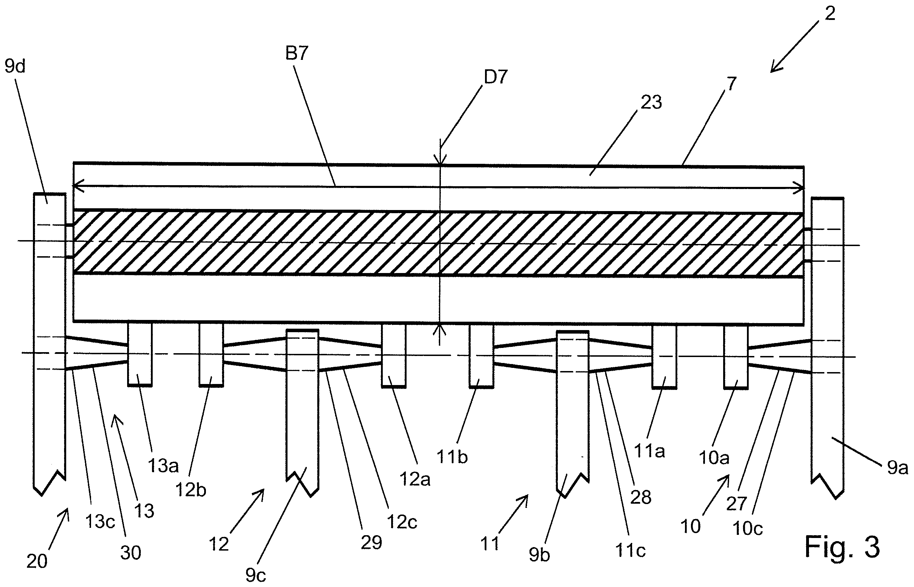

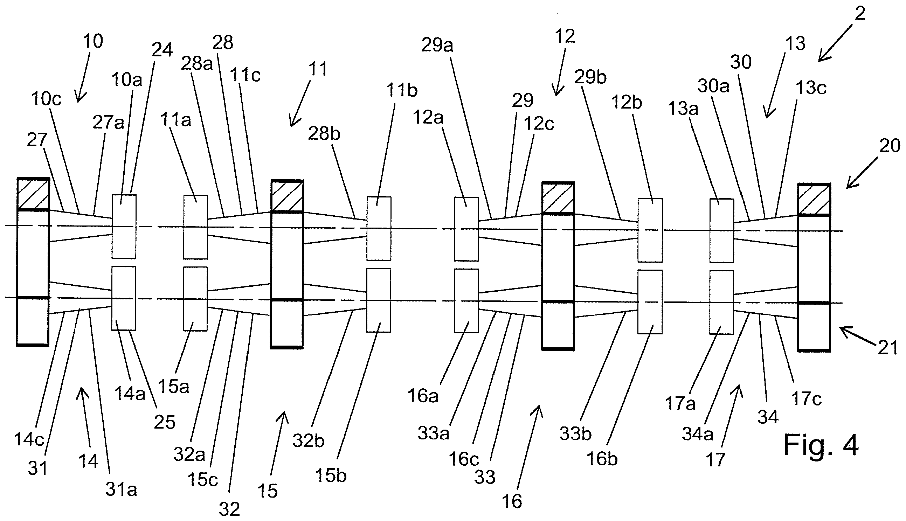

In der Figur 1 ist eine schematische Ansicht eines Bandförderers 1 gezeigt. Der Bandförderer 1 umfasst eine Umlenkvorrichtung 2, einen Fördergurt 3 sowie drei Führungstrommeln 4, 5 und 6. Die Umlenkvorrichtung 2 umfasst eine Umlenktrommel 7 und ein Stützmittel 8. Das Stützmittel 8 umfasst einen Stützkörper 9 und eine Vielzahl von Stützeinheiten 10 bis 17, wobei in den Figuren 1 und 2 nur die obere Stützeinheit 10 und die untere Stützeinheit 14 erkennbar sind. Die weiteren Stützeinheiten 11 bis 13 und 15 bis 17 sind in den Figuren 3 und 4 erkennbar. Jede Stützeinheit 10 bis 17 umfasst wenigstens eine Stützrolle 10a, 11a, 11b, 12a, 12b, 13a, 14a, 15a, 15b, 16a, 16b, 17a und ein Federmittel 10c bis 17c. Die Umlenkvorrichtung 2 ist mit ihrer Umlenktrommel 7 dort an dem Bandförderer 1 ausgebildet, wo dieser eine Abwurfkante 18 bildet, an welcher - z.B. nicht dargestellter Müll - in einen nicht dargestellten Behälter gefördert wird, wenn der Fördergurt 3 im Uhrzeigersinn umläuft. Abweichend von der schematischen Darstellung der Figur 4 ist die Umlenktrommel 7 mit einem vergleichsweise kleinen Durchmesser ausgeführt, sodass der Fördergurt an der Abwurfkante 18 einen spitzwinkel-ähnlichen Verlauf aufweist. Beispielsweise ist die Umlenktrommel 7 mit einem Durchmesser D7 von 50 mm und einer Breite B7 von bis zu 3 m ausgeführt. Durch einen Pfeil 19 ist in den Figuren 1 und 2 sowohl eine Ebene E angedeutet, als auch eine Richtung R symbolisiert, in welcher durch den Fördergurt 3 erzeugte Trumkräfte TK wirken. Die Stützeinheiten 10 bis 13 bilden eine obere Gruppe 20 und die Stützeinheiten 14 bis 17 bilden eine untere Gruppe 21 (siehe insbesondere Figuren 1 und 4). Dies beiden Gruppen 20, 21 stützen die Umlenktrommel 7 gegen die erwähnten Trumkräfte TK ab. Dadurch, dass die Stützeinheiten 10 bis 13 bzw. 14 bis 17 oberhalb bzw. unterhalb der Ebene E liegen, können diese auch Trumkräfte abfangen, welche parallel bzw. schräg zu der Ebene E ausgerichtet sind. Der Stützkörper 9 ist einteilig mit einem Maschinengestell 22 ausgebildet, welches die Führungstrommeln 4 bis 6 trägt, wobei zum Beispiel die Führungstrommel 4 als Antriebstrommel ausgebildet ist.

In der Figur 2 ist die bereits in der Figur 1 gezeigte Umlenkvorrichtung 2 nochmals in vergrößerter Ansicht dargestellt. In dieser Ansicht ist erkennbar wie eine Mantelfläche 23 der Umlenktrommel 7 durch Mantelflächen 24, 25 der Stützrollen 10a bzw. 14a abgestützt ist bzw. sich auf diesen abwälzt. Dies ist im Bereich einer Ausnehmung 26 des Stützkörpers 9 erkennbar. Weiterhin zeigt die Figur 2, dass sowohl die Umlenktrommel 7 als auch die Stützrollen 10a, 14a an dem Stützkörper 9 gelagert sind.

In der bereits erwähnten Figur 3 ist nun entsprechend der in den Figuren 1 und 2 gezeigten Schnittlinie III-III eine Draufsicht auf die Umlenkvorrichtung 7 gezeigt, wobei auf eine Darstellung des geschnittenen Fördergurts 3 verzichtet wurde. Von dem Stützkörper 9 sind in der Figur 3 vier Rippen 9a, 9b, 9c, 9d in Draufsicht erkennbar. An diesen Rippen 9a, 9b, 9c, 9d sind jeweils die Federmittel 10c bis 13c angeordnet. Die weiteren Federmittel 14c bis 17c, welche unterhalb der Federmittel 10c bis 13c positioniert sind, sind ebenfalls an diesen Rippen 9a, 9b, 9c, 9d angeordnet, sind aber nur in der Figur 4 abgebildet, um die Darstellung der Figur 3 übersichtlich zu halten. Die Federmittel 10c bis 13c sowie 14c bis 17c umfassen jeweils eine Achse 27 bis 30 bzw. 31 bis 34. Hierbei weisen die Achsen 27, 30, 31, 34 jeweils ein freies Ende 27a, 30a, 31a, 34a auf, an welchem jeweils die Stützrolle 10a, 13a, 14a, 17a angeordnet ist. Hierbei weisen die übrigen Achsen 28, 29, 32, 33 jeweils zwei freie Enden 28a, 28b, 29a, 29b, 32a, 32b, 33a, 33b auf, an welchen jeweils die Stützrollen 11a, 11b, 12a, 12b, 15a, 15b, 16a, 16b angeordnet sind (siehe auch Figur 4). In der Figur 3 ist nochmals gut erkennbar, wie die Stützrollen 10 bis 13 die Umlenkvorrichtung 7 an ihrer Mantelfläche 23 über deren gesamte Breite B7 abstützen.

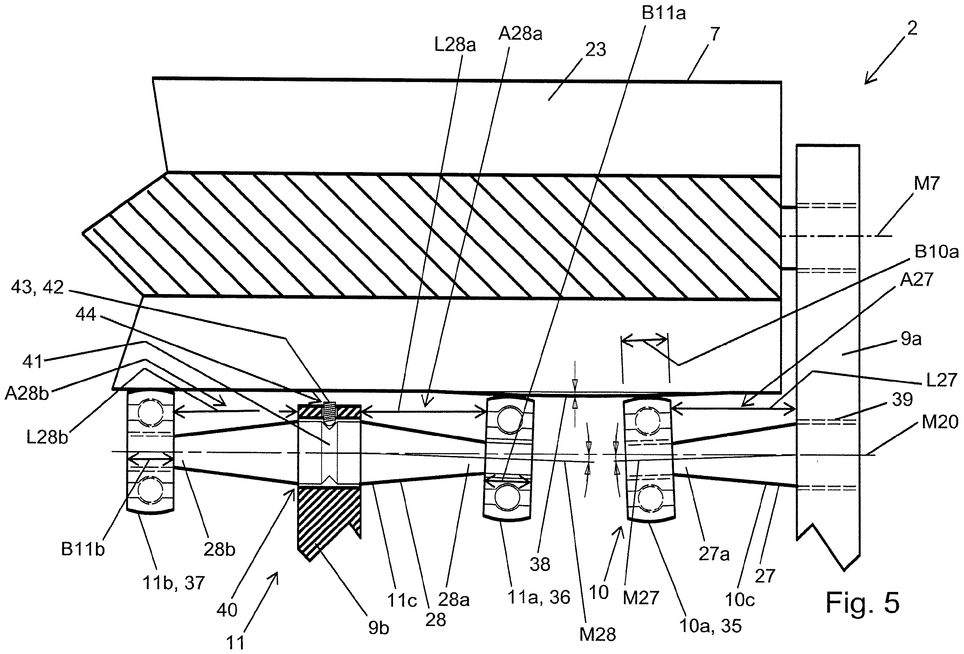

In der Figur 5 ist ein Detail der in der Figur 3 dargestellten Schnittansicht der Umlenkvorrichtung 2 gezeigt, wobei einzelne Bauteile der Umlenkvorrichtung 2 detaillierter dargestellt sind. Wie in der Figur 5 dargestellt sind die Stützrollen 10a, 11a, 11b durch Wälzlager 35, 36, 37 gebildet, welche als Radiallager ausgebildet sind. Im Bereich der Stützrollen 10a, 11a weist die Umlenktrommel 7 in ihrer dargestellten Drehstellung auf ihrer Mantelfläche 23 eine Toleranz in Form einer Erhebung 38 auf, welche z.B. auf eine Fertigungstoleranz oder auf eine Verschmutzung zurückzuführen ist. Eine elastische Verformbarkeit aller Federmittel 10c, 11c, welche als Achsen 27, 28 ausgebildet sind, ist derart ausgelegt, dass alle Federmittel zusammen die Umlenktrommel 7 derart abstützen, dass diese die wirkenden Trumkräfte ohne störende Durchbiegung abfangen kann. Weiterhin ist die elastische Verformbarkeit aller Federmittel auch derart ausgelegt, dass diese zum Beispiel die auf der Lauffläche 23 der Umlenktrommel 7 vorhandene Erhebung 38 dadurch kompensieren, dass sich die Federmittel 10c, 11c elastisch verbiegen und so der Erhebung 38 ausweichen. Im Unterschied zu einer aus dem Stand der Technik bekannten Stützwalze, welche parallel zu der Umlenktrommel liegt und eine ähnliche Breite wie die Umlenktrommel aufweist, ermöglicht die individuelle, unabhängige Anbindung der Stützrollen 10a, 11a, 11b, 12a, 12b, 13a, 14a, 15a, 15b, 16a, 16b, 17a, bei welcher die Federmittel 10c bis 13c bzw. 14c bis 17c die Stützrollen 10a, 11a, 11b, 12a, 12b, 13a, 14a, 15a, 15b, 16a, 16b, 17a an dem Stützkörper 9 abstützen, dass nur die jeweils betroffene Stützrolle bzw. die jeweils betroffenen Stützrollen ausweichen, so das nicht die gesamte Umlenktrommel 7 aufgrund des Vorhandenseins einer Toleranz bei jeder Umdrehung von dem Stützmittel 8 mit extremer Kraft gegen ihre Lagerung gedrückt wird.

Bei der Umlenkvorrichtung 2 verlaufen eine Mittelachse M7 der Umlenktrommel 7, eine Mittelachse M20 der oberen Gruppe 20 der Stützeinheiten 10 bis 13 und eine Mittelachse M21 der unteren Gruppe 21 der Stützeinheiten 14 bis 17 parallel zueinander (siehe auch Figur 2). Beim Ausweichen der Stützrollen 10a, 11a stellen sich Mittelachsen M27, M28 der Achsen 27, 28 schräg zu der Mittelachse M20. Hierbei ist die Achse 27 als Achse ausgeführt, welche einseitig aus einer in der Rippe 9a des Stützkörpers 9 als Durchgangsbohrung ausgeführten Aufnahme 39 ragt und sich von der Aufnahme 39 zu ihrem freien Ende 27a hin verjüngt. Hierbei ist die Achse 28 als Achse ausgeführt, welche zweiseitig aus einer in der Rippe 9b des Stützkörpers 9 als Durchgangsbohrung ausgeführten Aufnahme 40 ragt und sich von der Aufnahme 40 aus sowohl zu ihrem freien Ende 28a als auch zu ihrem freien Ende 28b verjüngt. Anhand der oberen Stützeinheit 11 ist in der Figur 5 exemplarisch gezeigt wie die Rippe 9b mit der Achse 28 verbunden ist. Die Achse 28 weist einen im Bereich des Stützkörpers 9 angeordneten Rücksprung 41 auf, wobei die Stützeinheit 11 ein Klemmmittel 42 umfasst, welches von dem Stützkörper 9 aus derart in den Rücksprung 40 der Achse 28 greift, dass die Achse 28 formschlüssig mit dem Stützkörper 9 verbunden ist. Hierbei ist das Klemmmittel 42 als Madenschraube 43 ausgebildet, welche in eine in der Rippe 9b des Stützkörpers 9 ausgeführte Gewindebohrung 44 eingeschraubt ist. Hierbei führt die Gewindebohrung 44 in die Aufnahme 40. Weiterhin ist in der Figur 5 erkennbar, dass die Mantelflächen 24, 25 der Stützrollen 10a, 11a, welche Laufflächen bilden, balig geformt sind. Entsprechend ist die Umlenkvorrichtung 2 insbesondere so ausgeführt, dass alle Stützrollen als Wälzlager ausgebildet sind und balige Laufflächen aufweisen. Hierdurch wird bei einem Ausweichen der Stützrolle 10a bzw. 11a, bei welchem sich die Stützrollen 10a bzw. 11a zu der Umlenktrommel 7 schräg stellen, vermieden, dass die Stützrollen 10a bzw. 11a mit einem Rand ihrer Lauffläche eine Kerbwirkung auf die Mantelfläche 23 der Umlenktrommel 7 ausüben.

Exemplarisch ist an der Achse 27 erkennbar, dass diese zwischen dem Stützkörper 9 und der Stützrolle 10a einen freien Achsenabschnitt A27 aufweist, welcher eine Länge L27 besitzt, welche etwa einem Dreifachen einer Breite B10a der Stützrolle 10a entspricht.

Auch bei einer beidseitig über den Stützkörper 9 hervorstehenden Achse z.B. der Achse 28 sind zwischen dem Stützkörper 9 und den Stützrollen 11a, 11b jeweils Achsenabschnitte A28a und A28b gebildet. Diese weisen jeweils ebenfalls eine Länge L28a bzw. L28b auf, welche etwa dem Dreifachen einer Breite B11a bzw. B11b der Stützrolle 11a bzw. 11b entspricht.

Gemäß einer nicht dargestellten Ausführungsvariante ist es auch vorgesehen, die Umlenkvorrichtung mit nur einer Gruppe von Stützeinheiten auszubilden, so dass alle Achsen auf einer Mittelachse liegen. Hierbei ist es vorgesehen, diese Mittelachse in Bezug auf eine Trumkraftebene so auszurichten, dass diese in der Trumkraftebene verläuft.

### Bezugszeichenliste:

- 1: Bandförderer
- 2: Umlenkvorrichtung
- 3: Fördergurt
- 4, 5, 6: Führungstrommel
- 7: Umlenktrommel
- 8: Stützmittel
- 9: Stützkörper
- 9a - 9c: Rippen von 9
- 10 - 13: obere Stützeinheiten
- 14 - 17: untere Stützeinheiten
- 10a: Stützrolle
- 10c: Federmittel
- 11a, 11b: Stützrolle
- 11c: Federmittel
- 12a, 12b: Stützrolle
- 12c: Federmittel
- 13a: Stützrolle
- 13c: Federmittel
- 14a: Stützrolle
- 14c: Federmittel
- 15a, 15b: Stützrolle
- 15c: Federmittel
- 16a, 16b: Stützrolle
- 16c: Federmittel
- 17a: Stützrolle
- 17c: Federmittel
- 18: Abwurfkante
- 19: Pfeil
- 20: obere Gruppe, gebildet durch 10 - 13
- 21: untere Gruppe, gebildet durch 14 - 17
- 22: Maschinengestell von 1
- 23: Mantelfläche von 7
- 24: Mantelflächen von 10a
- 25: Mantelflächen von 14a
- 26: Ausnehmung an 9
- 27: Achse
- 27a: freies Ende von 27
- 28: Achse
- 28a, 28b: freies Ende von 28
- 29: Achse
- 29a, 29b: freies Ende von 29
- 30: Achse
- 30a: freies Ende von 30
- 31: Achse
- 31a: freies Ende von 31
- 32: Achse
- 32a, 32b: freies Ende von 32
- 33: Achse
- 33a, 33b: freies Ende von 33
- 34: Achse
- 34a: freies Ende von 34
- 35, 36, 37: Wälzlager
- 38: Erhebung an 7
- 39: Aufnahme
- 40: Aufnahme
- 41: Rücksprung
- 42: Klemmmittel
- 43: Madenschraube
- 44: Gewindebohrung

- A27, A28a, A28b: freier Achsenabschnitt von 27, 28a, 28b
- B7: Breite von 7
- B10a, B11a, B11b: Breite von 10a, 11a, 11b
- E: Ebene
- L27, L27a, L27b: Länge von A27, A28a, A28b
- M27: Mittelachse von 27
- M28: Mittelachse von 28
- M7: Mittelachse von 7
- M20: Mittelachse von 20
- M21: Mittelachse von 21
- R: Richtung
- TK: Trumkraft

## Patentansprüche

1. Umlenkvorrichtung (2) für einen Förderergurt (3) eines Bandförderers (1) umfassend eine Umlenktrommel (7) und ein Stützmittel (8) für die Umlenktrommel (7),
- wobei das Stützmittel (8) einen Stützkörper (9) und eine Vielzahl von Stützeinheiten (10 - 13; 14 - 17) umfasst,
- wobei jede Stützeinheit (10 - 13; 14 - 17) wenigstens eine Stützrolle (10a; 11a, 11b; 12a, 12b; 13a; 14a; 15a, 15b; 16a, 16b; 17a) umfasst,
**dadurch gekennzeichnet,**
- **dass** jede Stützeinheit (10 - 13; 14 - 17) die wenigstens eine Stützrolle (10a; 11a, 11b; 12a, 12b; 13a; 14a; 15a, 15b; 16a, 16b; 17a) und ein Federmittel (10c - 17c) umfasst,
- wobei das Federmittel (10c - 17c) jeweils zwischen jeder Stützrolle (10a; 11a, 11b; 12a, 12b; 13a; 14a; 15a, 15b; 16a, 16b; 17a) und dem Stützkörper (9) angeordnet ist,
- **dass** das Federmittel (10c - 17c) eine Achse (27 - 34) umfasst,
- wobei die Achse (27 - 34) an dem Stützkörper (9) gelagert ist
- wobei die Achse (27; 30; 31; 34) einseitig über den Stützkörper (9) hinaussteht und ein erstes freies Ende (27a; 30a; 31a; 34a) aufweist oder derart an dem Stützkörper (9) gelagert ist, dass die Achse (28; 29; 32; 33) zweiseitig über den Stützkörper (9) hinaussteht und ein erstes freies Ende (28a; 29a; 32a; 33a) sowie ein zweites freies Ende (28b; 29b; 32b; 33b) aufweist- wobei an dem freien Ende (27a; 30a; 31a; 34a) oder den freien Enden (28a, 28b; 29a, 29b; 32a, 32b; 33a, 33b) der an dem Stützkörper (9) gelagerten Achse (27 - 34) jeweils eine der Stützrollen (10a; 11a, 11b; 12a, 12b; 13a; 14a; 15a, 15b; 16a, 16b; 17a) angeordnet ist und
- wobei eine Mantelfläche (23) der Umlenktrommel (7) durch Mantelflächen (24, 25) der Stützrollen (10a bzw. 14a) abgestützt ist bzw. sich auf diesen abwälzt.

2. Umlenkvorrichtung nach Anspruch 1, **dadurch gekennzeichnet, dass** eine Mittelachse (M27; M28) der Achse (27 - 34) parallel zu einer Mittelachse (M7) der Umlenktrommel (7) ausgerichtet ist.

3. Umlenkvorrichtung nach Anspruch 1 oder 2, **dadurch gekennzeichnet, dass** die jeweilige Stützrolle (10a; 11a, 11b; 12a, 12b; 13a; 14a; 15a, 15b; 16a, 16b; 17a) jeweils derart an dem freien Ende (27a;28a, 28b; 29a, 29b; 30a; 31a; 32a, 32b; 33a, 33b; 34a) der Achse (27 - 34) angeordnet ist, dass zwischen der Stützrolle (10a; 11a, 11b; 12a, 12b; 13a; 14a; 15a, 15b; 16a, 16b; 17a) und dem Stützkörper (9) ein freier Achsenabschnitt (A27; A28a; A28b) gebildet ist.

4. Umlenkvorrichtung nach Anspruch 3, **dadurch gekennzeichnet, dass** der freie Achsenabschnitt (A27; A28a; A28b) eine Länge (L27; L28a; L28b) aufweist, welche größer ist als eine Breite (B10; B11a; B11b) der Stützrolle (10a; 11a; 11b), und dass die Länge (L27; L28a; L28b) des freien Achsenabschnitts (A27; A28a; A28b) insbesondere wenigstens einer doppelten Breite der Stützrolle (10a; 11a; 11b) entspricht.

5. Umlenkvorrichtung nach Anspruch 3 oder 4, **dadurch gekennzeichnet, dass** der freie Achsenabschnitt (A27; A28a; A28b) der Achse (27a; 28a; 28b) von dem Stützkörper (9) zu der Stützrolle (10a; 11a; 11b) hin in seinem Querschnitt und insbesondere in seinem Durchmesser abnimmt (schwingen).

6. Umlenkvorrichtung nach wenigstens einem der vorhergehenden Ansprüche 1 oder 3 oder 5, **dadurch gekennzeichnet, dass** die Achse (27 - 34) einen im Bereich des Stützkörpers (9) angeordneten Rücksprung (41) aufweist, wobei die Stützeinheit (10 - 13; 14 - 17) ein Klemmmittel (42) umfasst, welches von dem Stützkörper (9) aus derart in den Rücksprung (41) der Achse (27 - 34) greift, dass die Achse (27 - 34) formschlüssig mit dem Stützkörper (9) verbunden ist.

7. Umlenkvorrichtung nach wenigstens einem der vorhergehenden Ansprüche 1 oder 3 oder 5 oder 6, **dadurch gekennzeichnet, dass** der Stützkörper (9) eine Vielzahl von Rippen (9b, 9c) umfasst, wobei die Achse (28; 29; 32; 33) jeweils in einer Aufnahme (40) einer der Rippen (9b, 9c) derart gelagert ist, dass diese beidseitig über die Rippe (9b, 9c) übersteht.

8. Umlenkvorrichtung nach Anspruch 1, **dadurch gekennzeichnet, dass** die Achse mit einem ersten freien Ende und mit einem zweiten freien Ende derart an dem Stützkörper gelagert ist und dass die Stützrolle zwischen einer linksseitigen Lagerstelle der Achse und einer rechtsseitigen Lagerstelle der Achse in einem Mittelbereich der Achse positioniert ist, wobei die Stützrolle insbesondere derart zwischen den beiden Lagerstellen angeordnet ist, dass zwischen der Stützrolle und der ersten Lagerstelle ein erster freier Achsenabschnitt gebildet ist und dass zwischen der Stützrolle und der zweiten Lagerstelle ein zweiter freier Achsenabschnitt gebildet ist.

9. Umlenkvorrichtung nach Anspruch 8, **dadurch gekennzeichnet, dass** bei der beidseitig gelagerten Achse eine erster freier Achsenabschnitt eine erste Länge und ein zweiter freier Achsenabschnitt eine zweite Länge aufweist, wobei die Längen jeweils größer sind als eine Breite der Stützrolle und wobei die Längen jeweils insbesondere wenigstens einer doppelten Breite der Stützrolle entsprechen.

10. Umlenkvorrichtung nach wenigstens einem der vorhergehenden Ansprüche 1 oder 2, **dadurch gekennzeichnet, dass** die Mittelachsen der Achsen aller Stützeinheiten auf einer gemeinsamen Mittelachse liegen, wobei diese Mittelachse parallel zu einer Mittelachse der Umlenktrommel verläuft.

11. Umlenkvorrichtung nach wenigstens einem Ansprüche 1 bis 9, **dadurch gekennzeichnet, dass** ein erster Teil der Stützeinheiten (10 - 13) einer ersten, oberen Gruppe (20) zugeordnet ist und dass ein zweiter Teil der Stützeinheiten (14 - 17) einer zweiten, unteren Gruppe (21) zugeordnet ist, wobei die Mittelachsen (M27, M28) der Achsen (27 - 30) der ersten, oberen Gruppe (20) der Stützeinheiten (10 - 13) auf einer ersten Mittelachse (M20) liegen, wobei die Mittelachsen der Achsen (31 - 34) der zweiten, unteren Gruppe (21) der Stützeinheiten (14 - 17) auf einer zweiten Mittelachse (M21) liegen, wobei diese beiden Mittelachsen (M20, M21) parallel zu einer Mittelachse (M7) der Umlenktrommel (7) verlaufen, wobei diese beiden Mittelachsen (M20, M21) zu der Mittelachse (M7) der Umlenktrommel (7) insbesondere gleiche Abstände aufweisen und wobei diese beiden Mittelachsen (M20, M21) voneinander insbesondere einen Abstand aufweisen, welcher kleiner ist als ein Durchmesser (D7) der Umlenktrommel (7).

12. Umlenkvorrichtung nach wenigstens einem der vorhergehenden Ansprüche, **dadurch gekennzeichnet, dass** das Federmittel (10c - 17c) zusätzlich zu der Achse (27 - 34) wenigstens ein elastisch verformbares Element umfasst, wobei das elastisch verformbare Element bzw. die elastisch verformbaren Elemente zwischen der Achse (27 - 34) und dem Stützkörper (9) und/oder zwischen der Achse (27 - 34) und der Stützrolle (10 - 17) angeordnet ist bzw. sind.

13. Umlenkvorrichtung nach wenigstens einem der vorhergehenden Ansprüche, **dadurch gekennzeichnet, dass** die Stützrolle (10 - 17) durch ein Wälzlager (35; 36; 37), insbesondere durch ein Radiallager und vorzugsweise durch ein als Radiallager ausgebildetes Kugellager gebildet ist.

## Claims

1. Deflecting device (2) for a conveyor belt (3) of a band conveyor (1), comprising a deflecting drum (7) and a support means (8) for the deflecting drum (7),
- wherein the support means (8) comprises a support body (9) and a multiplicity of support units (10-13; 14-17),
- wherein each support unit (10-13; 14-17) comprises at least one support roller (10a; 11a, 11b; 12a, 12b; 13a; 14a; 15a, 15b; 16a, 16b; 17a)
**characterized**
- **in that** each support unit (10-13; 14-17) comprises the at least one support roller (10a; 11a, 11b; 12a, 12b; 13a; 14a; 15a, 15b; 16a, 16b; 17a) and a spring means (10c-17c),
- wherein the spring means (10c-17c) is in each case arranged between each support roller (10a; 11a, 11b; 12a, 12b; 13a; 14a; 15a, 15b; 16a, 16b; 17a) and the support body (9),
- **in that** the spring means (10c-17c) comprises an axle (27-34),
- wherein the axle (27-34) is mounted on the support body (9),
- wherein the axle (27; 30; 31; 34) projects on one side beyond the support body (9) and has a first free end (27a; 30a; 31a; 34a), or is mounted on the support body (9) such that the axle (28; 29; 32; 33) projects on both sides beyond the support body (9) and has a first free end (28a; 29a; 32a; 33a) and a second free end (28b; 29b; 32b; 33b), wherein, on the free end (27a; 30a; 31a; 34a), or the free ends (28a, 28b; 29a, 29b; 32a, 32b; 33a, 33b), of the axle (27-34) mounted on the support body (9), there is arranged in each case one of the support rollers (10a; 11a, 11b; 12a, 12b; 13a; 14a; 15a, 15b; 16a, 16b; 17a), and
- wherein a lateral surface (23) of the deflecting drum (7) is supported by lateral surfaces (24, 25) of the support rollers (10a or 14a) or rolls thereon.

2. Deflecting device according to Claim 1, **characterized in that** a central axis (M27; M28) of the axle (27-34) is oriented parallel to a central axis (M7) of the deflecting drum (7).

3. Deflecting device according to Claim 1 or 2, **characterized in that** the respective support roller (10a; 11a, 11b; 12a, 12b; 13a; 14a; 15a, 15b; 16a, 16b; 17a) is in each case arranged on the free end (27a; 28a, 28b; 29a, 29b; 30a; 31a; 32a, 32b; 33a, 33b; 34a) of the axle (27-34) such that a free axle section (A27; A28a; A28b) is formed between the support roller (10a; 11a, 11b; 12a, 12b; 13a; 14a; 15a, 15b; 16a, 16b; 17a) and the support body (9).

4. Deflecting device according to Claim 3, **characterized in that** the free axle section (A27; A28a; A28b) has a length (L27; L28a; L28b) which is greater than a width (B10; B11a; B11b) of the support roller (10a; 11a; 11b), and **in that** the length (L27; L28a; L28b) of the free axle section (A27; A28a; A28b) corresponds in particular to at least twice the width of the support roller (10a; 11a; 11b).

5. Deflecting device according to Claim 3 or 4, **characterized in that** the cross section, and in particular the diameter, of the free axle section (A27; A28a; A28b) of the axle (27a; 28a, 28b) decreases from the support body (9) to the support roller (10a; 11a; 11b) (back and forth movement).

6. Deflecting device according to at least one of the preceding Claims 1, 3 and 5, **characterized in that** the axle (27-34) has a recess (41) which is arranged in the region of the support body (9), wherein the support unit (10-13; 14-17) comprises a clamping means (42) which, from the support body (9), engages into the recess (41) of the axle (27-34) such that the axle (27-34) is connected in a form-fitting manner to the support body (9).

7. Deflecting device according to at least one of the preceding Claims 1, 3, 5 and 6, **characterized in that** the support body (9) comprises a multiplicity of ribs (9b, 9c), wherein the axle (28; 29; 32; 33) is in each case mounted in a receiving part (40) of one of the ribs (9b, 9c) so as to project beyond the rib (9b, 9c) on both sides.

8. Deflecting device according to Claim 1, **characterized in that** the axle is mounted by way of a first free end and by way of a second free end on the support body, and **in that** the support roller is positioned in a central region of the axle between a left-hand bearing point of the axle and a righthand bearing point of the axle, wherein the support roller is arranged between the two bearing points in particular such that a first free axle section is formed between the support roller and the first bearing point and that a second free axle section is formed between the support roller and the second bearing point.

9. Deflecting device according to Claim 8, **characterized in that**, in the case of the axle mounted on both sides, a first free axle section has a first length and a second free axle section has a second length, wherein the lengths are each greater than a width of the support roller, and wherein the lengths in each case correspond in particular to at least twice the width of the support roller.

10. Deflecting device according to at least either of the preceding Claims 1 and 2, **characterized in that** the central axes of the axles of all the support units lie on a common central axis, wherein this central axis extends parallel to a central axis of the deflecting drum.

11. Deflecting device according to at least one of Claims 1 to 9, **characterized in that** a first portion of the support units (10-13) is assigned to a first, upper group (20), and **in that** a second portion of the support units (14-17) is assigned to a second, lower group (21), wherein the central axes (M27, M28) of the axles (27-30) of the first, upper group (20) of the support units (10-13) lie on a first central axis (M20), wherein the central axes of the axles (31-34) of the second, lower group (21) of the support units (14-17) lie on a second central axis (M21), wherein said two central axes (M20, M21) extend parallel to a central axis (M7) of the deflecting drum (7), wherein said two central axes (M20, M21) have in particular identical spacings with respect to the central axis (M7) of the deflecting drum (7), and wherein said two central axes (M20, M21), with respect to one another, have in particular a spacing which is smaller than a diameter (D7) of the deflecting drum (7).

12. Deflecting device according to at least one of the preceding claims, **characterized in that** the spring element (10c-17c) has, in addition to the axle (27-34), at least one elastically deformable element, wherein the elastically deformable element(s) is/are arranged between the axle (27-34) and the support body (9) and/or between the axle (27-34) and the support roller (10-17).

13. Deflecting device according to at least one of the preceding claims, **characterized in that** the support roller (10-17) is formed by a rolling bearing (35; 36; 37), in particular by a radial bearing and preferably by a ball bearing in the form of a radial bearing.

## Revendications

1. Dispositif de renvoi (2) pour une bande transporteuse (3) d'un transporteur à courroie (1), comportant un tambour de renvoi (7) et un moyen de support (8) pour le tambour de renvoi (7),
- le moyen de support (8) comporte un corps de support (9) et une pluralité d'unités de support (10 - 13 ; 14 - 17),
- chaque unité de support (10 - 13 ; 14 - 17) comportant au moins un rouleau de support (10a ; 11a, 11b ; 12a, 12b ; 13a ; 14a ; 15a, 15b ; 16a, 16b ; 17a),
caractérisé
- en ce que chaque unité de support (10 - 13 ; 14 - 17) comporte l'au moins un rouleau de support (10a ; 11a, 11b ; 12a, 12b ; 13a ; 14a ; 15a, 15b ; 16a, 16b ; 17a) et un moyen ressort (10c - 17c),
- le moyen ressort (10c - 17c) étant disposé respectivement entre chaque rouleau de support (10a ; 11a, 11b ; 12a, 12b ; 13a ; 14a ; 15a, 15b ; 16a, 16b ; 17a) et le corps de support (9),
- en ce que le moyen ressort (10c - 17c) comporte un axe (27 - 34),
- l'axe (27 - 34) étant monté sur le corps de support (9),
- l'axe (27 ; 30 ; 31 ; 34) dépassant d'un côté au-delà du corps de support (9) et comprenant une première extrémité libre (27a ; 30a ; 31a ; 34a) ou étant monté sur le corps de support (9) de telle sorte que l'axe (28 ; 29 ; 32 ; 33) dépasse des deux côtés au-delà du corps de support (9) et comprend une première extrémité libre (28a ; 29a ; 32a ; 33a) ainsi qu'une deuxième extrémité libre (28b ; 29b ; 32b ; 33b),
- l'un des rouleaux de support (10a ; 11a, 11b ; 12a, 12b ; 13a ; 14a ; 15a, 15b ; 16a, 16b ; 17a) étant respectivement disposé à l'extrémité libre (27a ; 30a ; 31a ; 34a) ou aux extrémités libres (28a, 28b ; 29a, 29b ; 32a, 32b ; 33a, 33b) de l'axe (27 - 34) monté sur le corps de support (9) et
- une surface d'enveloppe (23) du tambour de renvoi (7) étant supportée par des surfaces d'enveloppe (24, 25) des rouleaux de support (10a ou 14a) ou roulant sur celles-ci.

2. Dispositif de renvoi selon la revendication 1, **caractérisé en ce qu'**un axe médian (M27 ; M28) de l'axe (27 - 34) est orienté parallèlement à un axe médian (M7) du tambour de renvoi (7).

3. Dispositif de renvoi selon la revendication 1 ou 2, **caractérisé en ce que** le rouleau de support respectif (10a ; 11a, 11b ; 12a, 12b ; 13a ; 14a ; 15a, 15b ; 16a, 16b ; 17a) est disposé respectivement à l'extrémité libre (27a ;28a, 28b ; 29a, 29b ; 30a ; 31a ; 32a, 32b ; 33a, 33b ; 34a) de l'axe (27 - 34), de telle sorte qu'une partie d'un axe libre (A27 ; A28a ; A28b) est formée entre le rouleau de support (10a ; 11a, 11b ; 12a, 12b ; 13a ; 14a ; 15a, 15b ; 16a, 16b ; 17a) et le corps de support (9).

4. Dispositif de renvoi selon la revendication 3, **caractérisé en ce que** la partie d'axe libre (A27 ; A28a ; A28b) présente une longueur (L27 ; L28a ; L28b) qui est supérieure à une largeur (B10 ; B11a ; B11b) du rouleau de support (10a ; 11a ; 11b), et **en ce que** la longueur (L27 ; L28a ; L28b) de la partie d'axe libre (A27 ; A28a ; A28b) correspond en particulier au moins au double de la largeur du rouleau de support (10a ; 11a ; 11b).

5. Dispositif de renvoi selon la revendication 3 ou 4, **caractérisé en ce que** la partie d'axe libre (A27 ; A28a ; A28b) de l'axe (27a ; 28a ; 28b) diminue en section transversale et en particulier en diamètre à partir du corps de support (9) en direction du rouleau de support (10a ; 11a ; 11b) (oscillation).

6. Dispositif de renvoi selon au moins l'une des revendications précédentes 1 ou 3 ou 5, **caractérisé en ce que** l'axe (27 - 34) comprend un retrait (41) disposé dans la région du corps de support (9), l'unité de support (10 - 13 ; 14 - 17) comportant un moyen de serrage (42), lequel vient en prise, à partir du corps de support (9), dans le retrait (41) de l'axe (27 - 34), de telle sorte que l'axe (27 - 34) est relié par complémentarité de forme au corps de support (9).

7. Dispositif de renvoi selon au moins l'une des revendications précédentes 1 ou 3 ou 5 ou 6, **caractérisé en ce que** le corps de support (9) comporte une pluralité de nervures (9b, 9c), l'axe (28 ; 29 ; 32 ; 33) étant monté respectivement dans un logement (40) de l'une des nervures (9b, 9c) de telle sorte que celui-ci dépasse des deux côtés au-delà de la nervure (9b, 9c).

8. Dispositif de renvoi selon la revendication 1, **caractérisé en ce que** l'axe est monté sur le corps de support par une première extrémité libre et par une deuxième extrémité libre, et **en ce que** le rouleau de support est positionné dans une région centrale de l'axe entre un point d'appui, du côté gauche, de l'axe et un point d'appui, du côté droit, de l'axe, le rouleau de support étant disposé en particulier entre les deux points d'appui de telle sorte qu'une première partie d'axe libre est formée entre le rouleau de support et le premier point d'appui et qu'une deuxième partie d'axe libre est formée entre le rouleau de support et le deuxième point d'appui.

9. Dispositif de renvoi selon la revendication 8, **caractérisé en ce que** dans le cas d'un axe monté des deux côtés, une première partie d'axe libre présente une première longueur et une deuxième partie d'axe libre présente une deuxième longueur, les longueurs étant respectivement supérieures à une largeur du rouleau de support et les longueurs correspondant en particulier au moins au double de la largeur du rouleau de support.

10. Dispositif de renvoi selon au moins l'une des revendications précédentes 1 ou 2, **caractérisé en ce que** les axes médians des axes de toutes les unités de support sont situés sur un axe médian commun, cet axe médian s'étendant parallèlement à un axe médian du tambour de renvoi.

11. Dispositif de renvoi selon au moins l'une des revendications 1 à 9, **caractérisé en ce qu'**une première partie des unités de support (10 - 13) est associée à un premier groupe supérieur (20) et **en ce qu'**une deuxième partie des unités de support (14 - 17) est associée à un deuxième groupe inférieur (21), les axes médians (M27, M28) des axes (27 - 30) du premier groupe supérieur (20) des unités de support (10 - 13) étant situés sur un premier axe médian (M20), les axes médians des axes (31 - 34) du deuxième groupe inférieur (21) des unités de support (14 - 17) étant situés sur un deuxième axe médian (M21), ces deux axes médians (M20, M21) s'étendant parallèlement à un axe médian (M7) du tambour de renvoi (7), ces deux axes médians (M20, M21) présentant en particulier une même distance à l'axe médian (M7) du tambour de renvoi (7) et ces deux axes médians (M20, M21) présentant en particulier une distance l'un par rapport à l'autre, laquelle est inférieure à un diamètre (D7) du tambour de renvoi (7).

12. Dispositif de renvoi selon au moins l'une des revendications précédentes, **caractérisé en ce que** le moyen ressort (10c - 17c) comporte en plus de l'axe (27 - 34) au moins un élément déformable élastiquement, l'élément déformable élastiquement ou les éléments déformables élastiquement étant disposé(s) entre l'axe (27 - 34) et le corps de support (9) et/ou entre l'axe (27 - 34) et le rouleau de support (10 - 17).

13. Dispositif de renvoi selon au moins l'une des revendications précédentes, **caractérisé en ce que** le rouleau de support (10 - 17) est formé par un palier à roulement (35 ; 36 ; 37), en particulier par un palier radial et de préférence par un palier à billes réalisé en tant que palier radial.
